# DEMANDE DE BREVET EUROPEEN

(11) **EP 4 592 953 A1**
(43) Date de publication de la demande: **30.07.2025**
(21) Numéro de dépôt: 24305138.0
(22) Date de dépôt: 25.01.2024
(51) Int. Cl.: G06T 7/20

(54) **PROCÉDÉ ET DISPOSITIF DE CORRECTION DE SUIVI D'OBJETS, ET PROCÉDÉ ET SYSTÈME DE SUIVI D'OBJET(S) METTANT EN UVRE UNE TELLE CORRECTION**

(71) Demandeur: BULL SAS, 78340 Les Clayes-Sous-Bois (FR)
(72) Inventeur: BOUKAMEL-DONNOU, Cécile, 38190 FROGES (FR); GUYOT, Nathan, 38100 GRENOBLE (FR); METGE, Baptiste, 38000 GRENOBLE (FR); ORAN, Mikail, 38100 GRENOBLE (FR)
(74) Mandataire: IPAZ

(57) **Abrégé**

L'invention concerne un procédé (100) de correction de suivi d'objet(s) dans des images, ledit suivi comprenant une attribution d'un identifiant à chaque nouvel objet utilisé pour constituer une tracklet associée audit objet et conservé tant que ledit objet n'a pas été perdu lors dudit suivi ; ledit procédé (100) de correction comprenant, pour au moins un nouvel objet détecté sur une image courante, une étape (104) de comparaison dudit nouvel objet à au moins un objet récemment perdu :
- qui a fait l'objet d'un suivi, et
-dont le suivi a été perdu depuis une durée inférieure à une durée seuil prédéterminée avant la captation de ladite image courante ; pour confirmer ou non qu'il s'agit d'un nouvel objet.

Elle concerne également un programme d'ordinateur et un dispositif mettant en oeuvre un tel procédé, ainsi qu'un procédé et un système de suivi d'objets mettant en oeuvre une telle correction de suivi d'objets.

## Description

La présente invention concerne un procédé de correction de suivi d'objets dans des images prises par une ou plusieurs caméras. Elle concerne également un programme d'ordinateur, et un dispositif mettant en oeuvre un tel procédé de correction. Elle concerne en outre un procédé et un système de suivi d'objets mettant en oeuvre une telle correction.

Le domaine de l'invention est de manière générale le domaine du suivi d'objet(s) à partir d'images captées par une ou des caméras.

### État de la technique

Le suivi d'objets dans des images est réalisé de la manière suivante. Chaque image est analysée pour y détecter les objets qui apparaissent sur ladite image. Généralement, un cadre est placé sur chaque objet dans ladite image. Lorsqu'un nouvel objet est détecté sur l'image, un identifiant lui est attribué. Lorsque l'image contient un objet connu, c'est-à-dire un objet déjà détecté sur une image précédemment traitée, l'identifiant qui lui a été attribué préalablement est réutilisé. Ainsi, on obtient pour chaque objet une tracklet, c'est-à-dire un ensemble d'images sur lesquelles l'objet apparaît. Cette tracklet indique le trajet de l'objet dans le temps et dans l'espace.

Avec les techniques actuelles, on constate plusieurs anomalies. Dans certains cas, plusieurs tracklets correspondent à un même objet, en particulier lorsque ledit objet est occulté. Dans d'autres cas, les identifiants accordés à plusieurs objets sont intervertis, par exemple lorsque lesdits objets se croisent sur une image. Il arrive aussi qu'un identifiant soit attribué à un objet qui n'existe pas vraiment, par exemple dans le cas d'une ombre ou d'un reflet apparaissant sur les images.

Un but de la présente invention est de remédier à au moins un des inconvénients précités.

Un autre but de l'invention est de proposer une solution de correction de suivi d'objets sur des images permettant de rendre ledit suivi plus performant/précis.

Un autre but de l'invention est de proposer une solution de correction de suivi d'objets sur des images réduisant les erreurs de suivi rencontrées avec les solutions de suivi d'objets actuelles.

### Exposé de l'invention

L'invention propose d'atteindre au moins l'un des buts précités par un procédé de correction de suivi d'objet(s) dans des images captées par une ou plusieurs caméras, ledit suivi d'objet(s) comprenant une attribution d'un nouvel identifiant à chaque nouvel objet détecté sur lesdites images ; l'identifiant de chaque objet étant utilisé pour constituer une tracklet associée audit objet et conservé tant que ledit objet n'a pas été perdu lors dudit suivi ; ledit procédé de correction comprenant, pour au moins un nouvel objet détecté sur une image, dite image courante, une étape de comparaison dudit nouvel objet à au moins un objet, dit objet récemment perdu :
- qui a fait l'objet d'un suivi avant la captation de l'image courante, et
- dont le suivi a été perdu depuis une durée inférieure à une durée seuil prédéterminée avant la captation de ladite image courante ;
pour confirmer ou non qu'il s'agit d'un nouvel objet.

Ainsi, l'invention propose une solution pour corriger les erreurs dans une solution de suivi d'objets sur des images captées par une ou plusieurs caméras. La solution de suivi d'objets peut être tout type de solution dans laquelle un identifiant est attribué à chaque objet détecté sur les images, cet identifiant étant conservé tant que ledit objet apparait sur les images et n'a pas disparu du champ de la ou des caméras. Ainsi, un objet qui est détecté sur plusieurs images conserve son identifiant et toutes les images sur lesquelles il apparait sont mémorisées en association avec son identifiant, pour former une tracklet associée audit objet. Un objet nouvellement détecté sur une image, c'est-à-dire un objet qui n'a jamais été détecté (ou qui n'apparait pas) sur les images précédemment traitées, se voit attribué un nouvel identifiant qui est ensuite conservé lorsque ce même objet est détecté sur les images suivantes.

L'invention propose une étape de comparaison lors de laquelle il est vérifié si, un nouvel objet détecté est réellement un nouvel objet dans la vérité terrain, ou au contraire s'il correspond à un objet connu précédemment détecté, et dont la trace a été perdue temporairement. Ainsi, l'invention permet d'éliminer, ou du moins de diminuer, les anomalies dues à une occultation temporaire de l'objet, à un croisement de deux objets, à une sortie temporaire dudit objet du champ de la ou des caméras, etc. Par conséquent, l'invention permet de rendre une solution de suivi d'objet(s) plus performante, et de diminuer les erreurs de suivi d'objet(s) sur des images.

Pour un objet donné, on entend par « tracklet », un ensemble d'images sur lesquelles apparait ledit objet, et de préférence la position dudit objet sur chaque image, mémorisées en association avec ledit objet, et en particulier avec un identifiant dudit objet. Les images composant une tracklet peuvent avoir été captées par une même caméra ou par plusieurs caméras.

Par « objet », on entend tout type d'objet, tel qu'un humain, un animal, une voiture, etc. pouvant être suivi dans des images captées par une même caméra ou par plusieurs caméras.

Par « objet connu », on entend un objet qui a déjà été détecté sur des images préalablement traitées.

Par « nouvel objet », on entend un objet qui est détecté pour la première fois sur les images, c'est-à-dire un objet qui n'apparait pas ou un objet qui n'a pas été détecté, sur les images précédemment traitées.

Par « caméra », on entend tout type d'appareil d'acquisition d'une image, telle que tout type de caméra de type RGB, LIDAR, thermique, 3D, etc.

Par objet « perdu », ou objet « dont le suivi a été perdu », on entend un objet dont la trace a été perdue sur les images, du fait d'une occultation, d'un croisement, d'une sortie dudit objet du champ de vue de la ou des caméras, etc.

Le suivi d'objets peut être réalisé suivant toute solution connue.

Par exemple, pour une image courante IMᵢ, le suivi d'objets peut comprendre, une détection d'objet(s) présent dans ladite image courante IMᵢ. La détection d'objets sur l'image courante IMᵢ peut être réalisée selon toute technique connue, par exemple en utilisant la solution RESNET prenant en entrée ladite image courante.

Puis chaque objet détecté sur l'image courante IMᵢ est comparé à un ou des objets détectés sur une image IMᵢ₋₁ précédant, en particulier immédiatement, l'image courante IMᵢ. Cette comparaison peut comprend une comparaison d'apparence et/ou une comparaison de position.

Si l'objet détecté sur l'image courante IMᵢ correspond à un objet détecté sur l'image précédente IMᵢ₋₁, alors l'image courante, et en particulier la zone de l'image courante contenant l'objet, est mémorisée avec l'identifiant dudit objet. Dans le cas contraire, un nouvel identifiant est attribué audit objet.

Lorsqu'un objet apparaissant sur l'image précédente IMᵢ₋₁ n'est pas détecté sur l'image courante, ledit objet est considéré comme récemment perdu. Cet objet peut être mémorisé dans une liste d'objets récemment perdu.

Suivant des modes de réalisation, la durée seuil peut être fixe.

Suivant des modes de réalisation, la durée seuil peut être ajustable, par exemple par l'opérateur.

Suivant des modes de réalisation, la durée seuil peut être de quelques secondes, par exemple 5 s, ou 1 s.

Suivant des modes de réalisation, la durée seuil peut être de quelques dixièmes de secondes, par exemple 0,2 s ou 0,1 s.

Suivant des modes de réalisation, le procédé selon l'invention peut en outre comprendre, pour au moins un nouvel objet, une étape de confirmation lors de laquelle le résultat de l'étape de comparaison peut être soumis à un opérateur pour validation ou non.

Dans ce cas, l'opérateur réalise une vérification visuelle et valide ou non le résultat de l'étape de comparaison, ce qui permet d'éviter des erreurs, et augmenter la performance du suivi d'objets.

Alternativement, pour au moins un nouvel objet, le résultat de l'étape de comparaison peut ne pas être soumis à un opérateur, et considéré comme validé automatiquement sans avoir recours à un opérateur, par exemple lorsque la comparaison fournit un résultat supérieur à un seuil de certitude prédéterminé.

Suivant des modes de réalisation, si le nouvel objet ne correspond à aucun objet récemment perdu, ledit procédé peut comprendre une validation du nouvel identifiant attribué au nouvel objet.

Dans ce cas, le nouvel objet est réellement un nouvel objet par rapport à la vérité terrain. Le nouvel identifiant attribué au nouvel objet est conservé et la tracklet associée audit nouvel objet est mémorisée en association avec ledit nouvel identifiant.

Suivant des modes de réalisation, si le nouvel objet correspond à un objet récemment perdu, le procédé selon l'invention peut comprendre une étape de fusion de la tracklet du nouvel objet avec la tracklet dudit objet récemment perdu.

Suivant des modes de réalisation, la tracklet consolidée ainsi obtenue peut être mémorisée en association avec :
- le nouvel identifiant : dans ce cas, le nouvel identifiant peut être utilisé pour cet objet, à la place de l'identifiant préalablement attribué audit objet, ou
- de préférence, l'identifiant préalablement attribué audit objet : dans ce cas, le nouvel identifiant est abandonné et l'identifiant préalablement attribué audit objet est utilisé.

Ainsi, l'invention permet d'éviter d'avoir deux identifiants pour un même objet par rapport à la vérité terrain, ce qui permet de réaliser un suivi plus performant et plus efficace de l'objet.

De plus, l'invention permet d'éviter d'avoir deux tracklets pour un même objet par rapport à la vérité terrain, ce qui permet de réaliser un suivi plus performant et plus efficace de l'objet.

Suivant des modes de réalisation, lorsque le nouvel objet correspond à un objet récemment perdu, le procédé selon l'invention peut en outre comprendre une étape de calcul/estimation d'une position, dite intermédiaire, dudit objet à un au moins un instant intermédiaire entre :
- le moment auquel il a été perdu, c'est-à-dire le moment d'acquisition de la dernière image sur laquelle il a été détecté, et
- le moment auquel il est retrouvé, c'est-à-dire le moment d'acquisition de l'image courante.
En effet, entre ces deux moments, l'objet en question n'est plus détecté lors du suivi d'objet, mais il est possible d'estimer sa position. Par exemple, si l'objet en question est caché par un autre objet, il est tout de même possible d'estimer sa position, même s'il n'apparait pas sur les images.

La position intermédiaire peut être estimée/déterminée en fonction d'au moins un des paramètres suivants :
- de la dernière position connue dudit objet, c'est-à-dire de la position de l'objet sur la dernière image sur laquelle il est détecté ;
- l'instant d'acquisition de ladite dernière image ;
- de la position courante dudit objet, c'est-à-dire de la position de l'objet sur l'image courante ;
- l'instant d'acquisition de l'image courante ;
- d'une vitesse de déplacement dudit objet au moment où il a été perdu, respectivement au moment où il a été retrouvé ;
- d'une trajectoire/direction de déplacement dudit objet au moment où il a été perdu, respectivement au moment où il a été retrouvé.
Bien entendu, cette liste de paramètres n'est nullement exhaustive et d'autres paramètres peuvent être pris en compte.

La position intermédiaire peut être déterminée/estimée par tout type d'outil, de relation ou de modèle. Suivant un exemple de réalisation non limitatif, la position projetée peut être déterminée/estimée par un filtre de Kalman.

Suivant des modes de réalisation, l'étape de comparaison peut comprendre une comparaison de l'apparence du nouvel objet à celle d'au moins un objet récemment perdu.

La comparaison de l'apparence peut être réalisée suivant toute technique connue.

En particulier, sans perte de généralité, la comparaison de l'apparence peut être réalisée en utilisant un modèle d'intelligence artificielle, tel que par exemple un réseau de neurones, entrainé pour comparer l'apparence du nouvel objet à l'apparence d'un objet qui a été récemment perdu, et en particulier de chaque objet récemment perdu. Cette comparaison peut par exemple être réalisée en entrant la zone d'image comprenant le nouvel objet et la zone d'image comprenant l'objet récemment perdu dans le modèle d'intelligence artificielle. Pour chaque objet, la zone d'image peut correspondre à la zone délimitée par un cadre placé sur ledit objet. Les modèles de comparaison de deux objets en se basant sur l'apparence desdits objets sont bien connus de la personne du métier, et ne seront donc pas décrits plus en détail ici.

Suivant des modes de réalisation, l'étape de comparaison peut comprendre une comparaison de la position du nouvel objet à celle d'au moins un objet récemment perdu.

La position du nouvel objet utilisée pour la comparaison peut être la position dudit nouvel objet sur l'image courante, c'est-à-dire l'image sur laquelle il a été détecté.

Suivant des modes de réalisation, pour au moins un objet récemment perdu, la position utilisée pour la comparaison peut être la dernière position connue dudit objet récemment perdu, et en particulier la position dudit objet récemment perdu sur la dernière image sur laquelle il apparait.

Dans ce cas, la dernière image sur laquelle ledit objet récemment perdu apparaît est identifiée et sa position sur ladite image est utilisée lors de la comparaison. Cette position est la dernière position connue dudit objet récemment perdu.

Suivant des modes de réalisation, pour au moins un objet récemment perdu, la position utilisée pour la comparaison peut être une position, dite position projetée, dudit objet récemment perdu à l'instant de captation de l'image courante.

Dans ce cas, le procédé selon l'invention peut comprendre une étape d'estimation de ladite position projetée, préalablement à l'étape de comparaison de position.

La position projetée peut être estimée/déterminée en fonction d'au moins un des paramètres suivants :
- du temps écoulé depuis que l'objet a été perdu ;
- de la dernière position connue dudit objet ;
- d'une vitesse de déplacement dudit objet au moment où il a été perdu ;
- d'une trajectoire/direction de déplacement dudit objet au moment où il a été perdu.
Bien entendu, cette liste de paramètres n'est nullement exhaustive et d'autres paramètres peuvent être pris en compte.

La position projetée peut être déterminée/estimée par tout type d'outil, de relation ou de modèle. Suivant un exemple de réalisation non limitatif, la position projetée peut être déterminée/estimée par un filtre de Kalman.

Bien entendu, suivant des modes de réalisation, l'étape de comparaison peut combiner une comparaison de position et une comparaison d'apparence telles que décrites plus haut.

Par exemple, il est possible de sélectionner tout d'abord les objets récemment perdus dont les positions sont proches, i.e. inférieures à un seuil de distance prédéterminée, par rapport à la position du nouvel objet. Ensuite, l'apparence du nouvel objet peut être comparée à l'apparence de chacun de ces objets récemment perdus ainsi sélectionnés.

Alternativement, il est possible d'identifier tout d'abord l'objet récemment perdu dont la position est la plus proche de la position du nouvel objet. Ensuite, l'apparence du nouvel objet peut être comparée à l'apparence dudit objet récemment perdu ainsi identifié.

Bien entendu, l'invention n'est pas limitée à ces alternatives et d'autres alternatives sont possibles sans sortir du cadre de la présente invention.

Suivant des modes de réalisation, pour au moins un nouvel objet détecté, l'étape de comparaison peut être réalisée après attribution d'un nouvel identifiant audit objet.

Dans ce cas, un nouvel identifiant est attribué au nouvel objet et conservé jusqu'à la réalisation de l'étape de comparaison. Si cette dernière confirme que l'objet est bien un nouvel objet, alors ledit nouvel objet conserve ledit nouvel identifiant qui lui a été attribué, éventuellement après validation par un opérateur.

Dans ces modes de réalisation, l'étape de comparaison peut être réalisée :
- au fur et à mesure du suivi d'objets, par exemple à chaque fois qu'un nouvel objet est détecté, ou par lots de nouveaux objets détectés ;
- à la fin du suivi d'objets : dans ce cas plusieurs, voire tous les, nouveaux objets détectés lors du suivi d'objets peuvent être traités.

Suivant des modes de réalisation, pour au moins un nouvel objet détecté, l'étape de comparaison peut être réalisée avant attribution d'un nouvel identifiant audit objet, le nouvel identifiant étant attribué qu'en cas de confirmation qu'il s'agit bien d'un nouvel objet.

Dans ce cas, aucun nouvel identifiant n'est attribué à un nouvel objet tant que ledit nouvel objet n'a pas été confirmé comme nouvel objet par l'étape de vérification, éventuellement après validation d'un opérateur.

Dans ces modes de réalisation, l'étape de comparaison est réalisée au fur et à mesure du suivi d'objets.

Suivant des modes de réalisation, les images peuvent être captées par une même caméra.

Suivant des modes de réalisation, les images peuvent être captées par plusieurs caméras, en particulier plusieurs caméras situées sur un même site ou sur des sites différents.

Selon un autre aspect de l'invention, il est proposé un programme d'ordinateur comprenant des instructions exécutables qui, lorsqu'elles sont exécutées par un appareil informatique, mettent en en oeuvre toutes les étapes du procédé de correction de suivi d'objets selon l'invention.

Le programme d'ordinateur peut être en tout langage informatique, tel que par exemple en langage machine, en C, C++, JAVA, Python, etc.

Le programme d'ordinateur peut être un unique programme d'ordinateur ou un ensemble de plusieurs programmes d'ordinateur.

Selon un autre aspect de l'invention, il est proposé un dispositif de correction de suivi d'objets comprenant des moyens configurés pour mettre en oeuvre toutes les étapes du procédé de correction de suivi d'objets selon l'invention.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, en exécutant le programme d'ordinateur selon l'invention.

Selon un autre aspect de l'invention, il est proposé un procédé de suivi d'objets dans des images captées par une ou plusieurs caméras, ledit procédé comprenant :
- un suivi d'au moins un objet sur lesdites images, et
- une correction dudit suivi d'objets par le procédé de correction selon l'invention.

Le suivi d'objet peut être réalisée selon toute technique connue, en utilisant toute solution de suivi d'objets connue.

Suivant des modes de réalisation, la correction peut être mise en oeuvre lors dudit suivi d'objets, en particulier en temps réel. En d'autres termes, la correction est réalisée pendant le suivi d'objets.

Suivant des modes de réalisation, la correction peut être mise en oeuvre après le suivi d'objets, c'est-à-dire après que le suivi d'objets est terminé.

Suivant des modes de réalisation, le suivi d'objets peut être réalisé en temps réel sur des images en cours de captation. Autrement dit, les images captées par une ou puiseurs caméras, sont immédiatement analysées pour le suivi d'objets se trouvant sur lesdites images. Dans ce cas, le flux d'images peut être un flux d'images en streaming captées par une ou plusieurs caméras.

Suivant des modes de réalisation, le suivi d'objets peut être réalisé *a posteriori,* dans des images préalablement captées et mémorisées dans une base d'images. Dans ce cas, le suivi d'objets n'est pas réalisé en temps réel mais bien après la captation des images. En d'autres termes, le suivi d'objets dans les images est réalisé de manière décalée dans le temps par rapport au moment où les images sont captées.

Selon un autre aspect de l'invention, il est proposé un système de suivi d'objets sur des images, ledit système comprenant :
- au moins une caméra, et
- au moins une unité de calcul ;
configurées pour mettre en oeuvre toutes les étapes du procédé de suivi d'objet(s) selon l'invention.

Au moins une caméra peut être locale ou distante du dispositif. Dans ce dernier cas, la caméra peut être en communication avec le dispositif au travers d'un réseau de communication filaire ou sans fil, tel que par exemple le réseau Internet.

Lorsque l'invention comprend plusieurs caméras, au moins deux desdites caméras peuvent être distribuées dans l'espace par exemple au sein d'un lieu, tel qu'une gare ou un aéroport, ou dans une ville, ou encore le long d'une voie de circulation.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un procédé de correction de suivi d'objets selon l'invention ;
- les FIGURES 2-4 sont des représentations schématiques d'exemples de réalisation non limitatif d'un procédé de suivi d'objets selon l'invention ;
- la FIGURE 5 est une représentation schématique d'un exemple de réalisation non limitatif d'un dispositif de correction de suivi d'objets selon l'invention ;
- la FIGURE 6 est une représentation schématique d'un exemple de réalisation non limitatif d'un dispositif de suivi d'objets selon l'invention ; et
- la FIGURE 7 est une représentation schématique d'un exemple de réalisation non limitatif d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

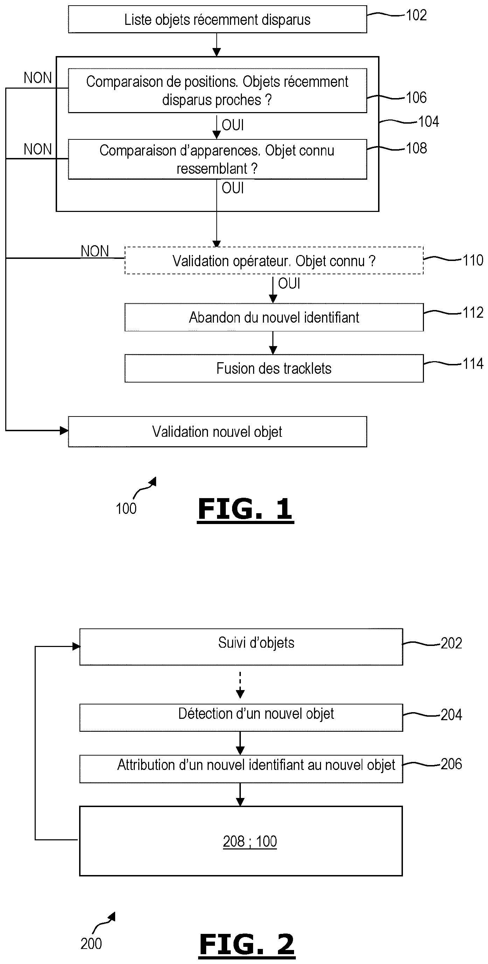

La FIGURE 1 est une représentation schématique d'un exemple de réalisation non limitatif d'un procédé selon la présente invention de correction de suivi d'objets sur des images captées par une ou plusieurs caméras.

Le procédé 100 de la FIGURE 1 peut être utilisé pour corriger le suivi de tout type d'objet, tel qu'un être vivant, un humain, un animal, une voiture, une moto, etc. à partir d'images provenant d'une caméra, ou de plusieurs caméras se trouvant sur un même site ou distribuées dans l'espace sur plusieurs sites. Dans la suite, et sans perte de généralité, on estime que le procédé 100 est utilisé pour corriger le suivi de personne(s) sur des images.

Le procédé 100 peut être mis en oeuvre :
- pendant le suivi d'objets, c'est-à-dire lorsque le suivi d'objets est en cours de réalisation ; ou
- après la fin du suivi d'objets.

Lorsque que le procédé 100 est mis en oeuvre pendant le suivi d'objets, ledit procédé peut être mis en oeuvre :
- à chaque fois qu'un nouvel objet est détecté, ou
- à chaque fois qu'un nombre prédéterminé de N, avec N≥2, nouveaux objets ont été détectés ; ou encore
- à une fréquence temporelle prédéterminée, telle que par exemple toutes les 5 minutes.

Dans tous les cas, le procédé 100 est réalisé individuellement pour un, ou pour chaque, nouvel objet détecté lors du suivi d'objets sur une image, appelé image courante.

Le procédé 100 comprend une étape 102 lors de laquelle, une liste d'objets récemment perdus est déterminée/tenue, par rapport à l'instant de captation de l'image courante. Cette liste d'objets comprend :
- chaque objet détecté sur des images précédemment captées, et
- dont la trace a été perdue depuis une durée inférieure à une durée seuil prédéterminée avant la captation de ladite image courante.
Autrement dit, cette liste comprend au moins un objet, et en particulier tous les objets, qui ne sont plus détectés au moins sur l'image précédant l'image courante, mais qui étaient détectés sur d'autres images captées pendant la fenêtre temporelle précédant l'instant de captation de l'image courante, et de durée égale à la durée seuil.

Le procédé 100 comprend ensuite une étape 104 de comparaison du nouvel objet à au moins un objet récemment perdu pour confirmer ou infirmer que le nouvel objet est bien un nouvel objet par rapport à la vérité terrain, et ne correspond pas à un objet précédemment détecté et dont la trace a été momentanément et récemment perdue. Autrement dit, cette étape 104 a pour but d'éviter que le nouvel objet soit considéré comme nouvel objet à tort, en contradiction avec la vérité terrain.

Cette étape de comparaison 104 comprend une étape 106 de comparaison :
- de la position, dans la scène, du nouvel objet ;
- à la position, dans la scène, de chacun des objets récemment perdus, listés dans la liste constituée/tenue à l'étape 102 ;
pour détecter les objets récemment perdus qui sont proches du nouvel objet, par exemple séparés d'une distance inférieure à un seuil de distance prédéterminé. Pour au moins un objet récemment perdu, la position utilisée pour la comparaison peut être :
- la dernière position connue dudit objet récemment perdu, et en particulier la position dudit objet récemment perdu sur la dernière image sur laquelle il apparait ; ou
- une position, dite position projetée, dudit objet récemment perdu à l'instant de captation de l'image courante.
Si l'étape 106 n'identifie aucun objet proche, le nouvel objet est confirmé comme étant un nouvel objet dans la vérité terrain.

Si l'étape 106 identifie un ou plusieurs objets récemment perdus proches du nouvel objet, lors d'une étape 108, l'apparence du nouvel objet est comparée à l'apparence de chacun des objets récemment perdus et identifiés comme étant proches, lors de l'étape 106. Cette comparaison peut par exemple être réalisée en utilisant un modèle d'intelligence artificielle, tel qu'un réseau neuronal, entrainé pour cela et qui prend en entrée la zone d'image comprenant le nouvel objet et une zone d'image comprenant l'objet connu récemment perdu. Si l'étape 108 n'identifie aucun objet récemment perdu ressemblant au nouvel objet, le nouvel objet est confirmé comme nouvel objet dans la vérité terrain.

Si l'étape 108 identifie un objet récemment perdu suffisamment ressemblant au nouvel objet, alors le nouvel objet peut être considéré comme correspondant audit objet récemment perdu.

Dans ce cas, lors d'une étape optionnelle 110, le résultat de l'étape de comparaison 104 peut, optionnellement, être soumis à un opérateur pour validation, par exemple en affichant le nouvel objet et l'objet récemment perdu, identifié lors de l'étape 108, sur un écran d'affichage pour vérification visuelle par l'opérateur. Si, à l'étape 110, l'opérateur ne confirme pas que le nouvel objet correspond à l'objet connu, alors le nouvel objet est définitivement considéré comme nouvel objet.

Si, à l'étape 110, l'opérateur confirme que le nouvel objet correspond à l'objet récemment perdu, alors le nouvel objet est définitivement considéré comme correspondant audit objet connu récemment perdu. Lors d'une étape 112, si un nouvel identifiant avait préalablement été attribué au nouvel objet, ledit nouvel identifiant est abandonné au profit de l'identifiant de l'objet récemment perdu.

Lors d'une étape 114, la tracklet mémorisée avec le nouvel identifiant est fusionnée avec la tracklet mémorisée avec l'identifiant de l'objet récemment perdu, pour obtenir une tracklet consolidée.

Les étapes 102-114 peuvent être réalisées pour tout nouvel objet détecté lors d'un suivi d'objets, à tour de rôle ou en même temps.

Dans l'exemple de la FIGURE 1, le résultat de l'étape de comparaison 104 est confirmée ou infirmée par un opérateur los d'une étape 110 de validation. Bien entendu, cette étape de validation 110 est optionnelle.

Dans l'exemple de la FIGURE 1, l'étape de comparaison 104 comprend une comparaison de position et une comparaison d'apparence. Bien entendu, suivant des modes de réalisation alternatifs, l'étape de comparaison 104 peut ne comprendre qu'une seule de ces comparaisons.

Dans l'exemple de la FIGURE 1, la comparaison d'apparence est réalisée uniquement pour les objets récemment perdus considérés comme proches lors de l'étape de comparaison de position. Bien entendu, suivant des modes de réalisation alternatifs, la comparaison d'apparence peut être réalisée pour tous les objets récemment perdus. Suivant encore d'autres modes de réalisation, la comparaison d'apparence peut être réalisée avant la comparaison de position, et la comparaison de position peut être réalisée uniquement pour les objets connus identifiés comme ressemblants.

Dans l'exemple de la FIGURE 1, l'étape optionnelle de validation par un opérateur est réalisée uniquement lorsque le nouvel objet correspond à un objet connu. Bien entendu, suivant une alternative, l'étape optionnelle de validation par un opérateur peut être réalisée, quel que soit le résultat de l'étape de vérification, y compris lorsque l'étape de vérification confirme que le nouvel objet ne correspond pas à un objet connu. Cela permet à l'opérateur de détecter des erreurs, par exemple lorsqu'un identifiant a été attribué à un objet qui n'existe pas vraiment dans la vérité terrain, par exemple dans le cas d'une ombre ou d'un reflet apparaissant sur les images et considéré, à tort, comme étant un objet.

La FIGURE 2 est une représentation schématique d'un exemple de réalisation non limitatif d'un procédé de suivi d'objets selon la présente invention.

Le procédé 200 de la FIGURE 2 peut être utilisé pour le suivi de tout type d'objet, tel qu'un être vivant, un humain, un animal, une voiture, une moto, etc. à partir d'images provenant d'une caméra, ou de plusieurs caméras se trouvant sur un même site ou distribuées dans l'espace sur plusieurs sites. Dans la suite, et sans perte de généralité, on estime que le procédé 200 est utilisé pour le suivi d'une personne.

Le procédé 200 comprend une phase 202 de suivi d'objets à partir d'images reçues d'une ou plusieurs caméras. Lors de cette phase, chaque objet comporte un identifiant et est suivi sur les images traitées, par exemple à tour de rôle.

Lorsqu'un objet connu, c'est-à-dire un objet apparaissant sur une ou des images préalablement traitées, est détecté sur l'image courante en cours de traitement, un cadre est positionné sur ledit objet dans ladite image courante pour indiquer :
- la position de l'objet sur ladite image courante, et/ou
- délimiter la zone de l'image courante correspondant audit objet.
L'image courante sur laquelle l'objet apparait, ou la zone délimitée par le cadre positionné sur ledit objet, est stockée dans une tracklet mémorisée en association avec l'identifiant de l'objet.

Le procédé 200 comprend une étape 204 de détection d'un nouvel objet, c'est-à-dire un objet qui n'est pas détecté sur l'image précédemment traitée. Un tel nouvel objet peut être :
- un nouvel objet entrant dans le champ de vision de la caméra, ou des caméras, fournissant les images ;
- un objet déjà présent dans les images précédemment traitées, mais qui a été temporairement occulté de sorte que sa trace a été perdue au moins sur l'image traitée immédiatement avant l'image courante ;
- un objet déjà présent dans les images fournies mais qui est temporairement sorti du champ de vision de la caméra, ou des caméras, fournissant les images de sorte que sa trace a été perdue au moins sur l'image traitée immédiatement avant l'image courante ;
- etc.

Le procédé 100 comprend, après l'étape 204, une étape 206 lors de laquelle un nouvel identifiant est attribué audit nouvel objet détecté lors de l'étape 104.

La phase de suivi 102 peut être continuée en parallèle des étapes 204 et 206 de sorte que le nouvel objet est suivi et une tracklet est constituée pour le nouvel objet, avec le nouvel identifiant. Alternativement, la phase de suivi 102 peut être arrêtée lorsqu'un nouvel objet est détecté.

Puis, après l'étape 206, le procédé 200 comprend une étape 208 de correction appliquée au nouvel objet détecté à l'étape 204 pour confirmer, ou non, que le nouvel objet est bien un nouvel objet, ou non, dans la vérité terrain. L'étape de correction 208 peut être, ou peut correspondre à, un procédé de correction selon l'invention et en particulier au procédé 100 de la FIGURE 1.

Dans l'exemple 200 de la FIGURE 1, l'étape de correction 208 est réalisée dès qu'un nouvel objet est détecté lors du suivi d'objets sur les images, sans arrêter la phase de suivi pour la réalisation des étapes 204-208.

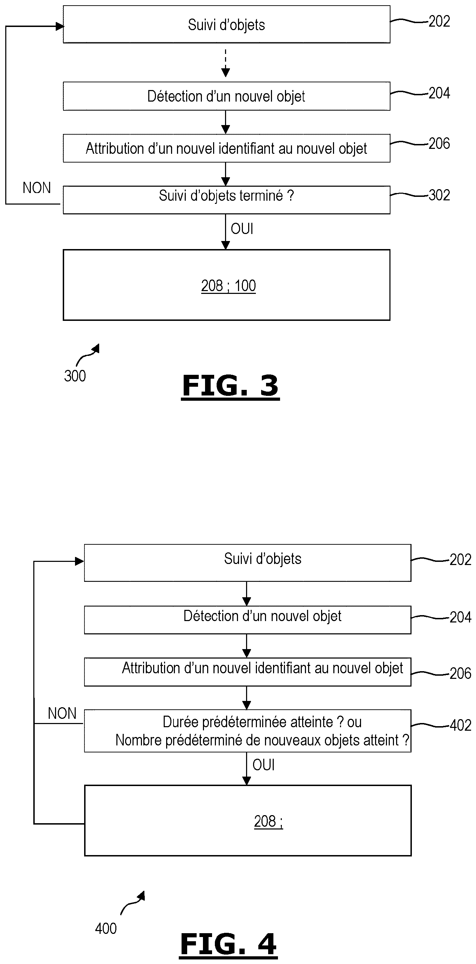

La FIGURE 3 est une représentation schématique d'un autre exemple de réalisation non limitatif d'un procédé selon la présente invention.

Le procédé 300 de la FIGURE 3 comprend toutes les étapes du procédé 200 de la FIGURE 2.

Dans le procédé 200, l'étape de correction 208 est réalisée dès qu'un nouvel objet est détecté lors du suivi d'objets sur les images. A la différence du procédé 200, dans le procédé 300, l'étape de correction 208 n'est pas réalisée dès qu'un nouvel objet est détecté comme décrit dans la suite.

En effet, dans le procédé 300, à l'instar du procédé 200, dès qu'un nouvel objet est détecté lors de l'étape 204, l'étape 206 est réalisée pour attribuer un nouvel identifiant à ce nouvel objet et la phase de suivi 202 est poursuivie avec ce nouvel identifiant. Aucune étape de correction n'est réalisée tant que le suivi d'objets est en cours. Cette condition est testée lors d'une étape 302.

Puis, lorsque la phase de suivi 202 est terminée, l'étape de correction 208 est réalisée individuellement pour chacun des nouveaux objets détectés lors de la phase de suivi 202. L'étape 208 de correction peut être réalisée
- immédiatement après la fin de la phase de suivi 202, ou
- bien après la fin de la phase de suivi 202, de manière découplée de la phase de suivi 202.

La FIGURE 4 est une représentation schématique d'un autre exemple de réalisation non limitatif d'un procédé de suivi d'objets selon la présente invention.

Le procédé 400 de la FIGURE 4 comprend toutes les étapes du procédé 300 de la FIGURE 3.

Dans le procédé 300, l'étape de correction 208 est réalisée à la fin de la phase de suivi 202. A la différence du procédé 300, dans le procédé 400, l'étape de correction 208 n'est pas réalisée à la fin de la phase de suivi 202.

En effet, dans le procédé 400, l'étape de correction 208 est réalisée individuellement pour chacun des nouveaux objets détectés :
- au bout d'une durée prédéterminée, D, par exemple D=5 minutes ; ou
- au bout d'un nombre prédéterminé de N nouveaux objets détectés, par exemple N=5.

Pour ce faire, le procédé 400 comprend une étape 402 pour tester si le nombre prédéterminé N de nouveaux objets, ou la durée prédéterminée D, est atteint(e), à chaque fois qu'un nouvel objet est détecté. Si oui, l'étape 208 est réalisée individuellement pour chaque nouvel objet. Sinon, la phase de suivi 202 continue jusqu'à atteindre le nombre N de nouveaux objets, ou la durée D prédéterminée.

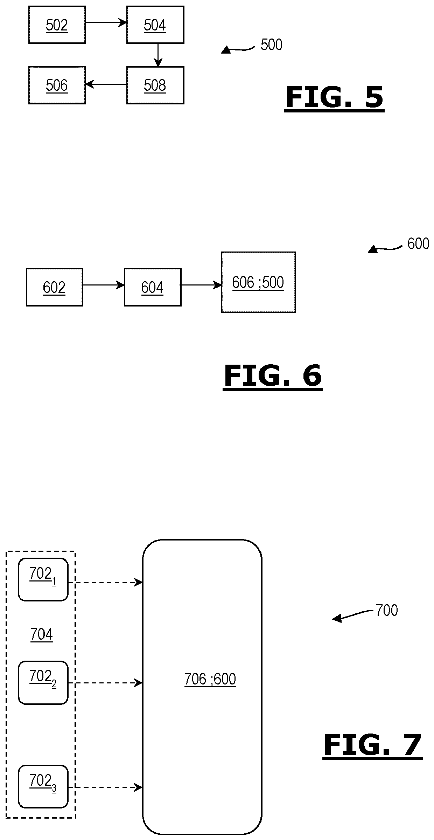

La FIGURE 5 est une représentation schématique d'un exemple de réalisation non limitatif d'un dispositif selon la présente invention de correction de suivi d'objets.

Le dispositif 500 de la FIGURE 5 peut être utilisé pour mettre en oeuvre un procédé selon l'invention de correction de suivi d'objets, et en particulier le procédé 100 de la FIGURE 1.

Le dispositif 500 comprend un module 502 de détermination, ou de tenue, d'une liste d'objets récemment perdus. Ce module 502 est par exemple configuré/programmé pour, réaliser l'étape 102 du procédé 100.

Le dispositif 500 comprend un module 504 de vérification, pour déterminer si un nouvel objet détecté correspond réellement à un nouvel objet dans la vérité terrain. Ce module 504 est par exemple configuré/programmé pour réaliser l'étape 104 du procédé 100.

Le dispositif 400 comprend un module 506 de validation, pour demander à un opérateur de valider le résultat de la vérification réalisée par le module de vérification 504. Ce module 506 est par exemple configuré/programmé pour réaliser l'étape 110 du procédé 100.

Le dispositif 400 comprend un module 508 de gestion d'identifiants et de tracklets associés aux objets suivis. Ce module 508 est par exemple configuré/programmé pour réaliser les étapes 112-114 du procédé 100.

Au moins un des modules 502-508 peut être un module indépendant des autres modules 502-508.

Au moins deux des modules 502-508 peuvent intégrés au sein d'un même module.

Au moins un des modules 502-508 peut être un module matériel, tel qu'un processeur, une puce électronique, etc.

Au moins un des modules 502-508 peut être un module logiciel, tel qu'un programme d'ordinateur.

Au moins un des modules 502-508 peut être une combinaison d'au moins un module logiciel et d'au moins un module matériel.

En particulier, au moins un des modules 502-508 peut être intégré dans une puce électronique, ou encore dans une application installée dans un appareil utilisateur.

En particulier, le dispositif de correction de suivi d'objets 500 peut se présenter sous la forme d'une unité de calcul.

La FIGURE 6 est une représentation schématique d'un exemple de réalisation non limitatif d'un dispositif selon la présente invention de suivi d'objets.

Le dispositif 600 de la FIGURE 6 peut être utilisé pour mettre en oeuvre un procédé selon l'invention de suivi d'objets, et en particulier l'un quelconque des procédés 200, 300 ou 400 décrits plus haut.

Le dispositif 600 comprend un module 602 de suivi d'objets sur des images captées par une ou plusieurs caméras. Ce module 602 est par exemple configuré/programmé pour réaliser l'étape 202 des procédés 200, 300 ou 400.

Le dispositif 600 comprend un module 604 de détection d'un nouvel objet sur les images. Ce module 604 est par exemple configuré/programmé pour réaliser les étapes 204-206 des procédés 200, 300 ou 400. Bien que représenté indépendamment du module de suivi 602, le module 604 de détection d'un nouvel objet peut alternativement être intégré dans le module de suivi 602.

Le dispositif 600 comprend en outre un module 606 de correction de suivi d'objets. En particulier, le module 606 peut être, ou peut comprendre, le dispositif 500 de la FIGURE 5.

Au moins un des modules 602-606 peut être un module indépendant des autres modules 602-606.

Au moins deux des modules 602-606 peuvent être intégrés au sein d'un même module.

Au moins un de modules 602-606 peut être un module matériel, tel qu'un processeur, une puce électronique, etc.

Au moins un des modules 602-606 peut être un module logiciel, tel qu'un programme d'ordinateur.

Au moins un des modules 602-606 peut être une combinaison d'au moins un module logiciel et d'au moins un module matériel.

En particulier, au moins un des modules 602-606 peut être intégré dans une puce électronique, ou encore dans une application installée dans un appareil utilisateur.

En particulier, le dispositif de suivi d'objets 600 peut se présenter sous la forme d'une unité de calcul.

La FIGURE 7 est une représentation schématique d'un exemple de réalisation non limitatif d'un système de suivi d'objets selon l'invention.

Le système 700 peut être utilisé pour mettre en oeuvre un procédé de suivi d'objets selon l'invention, et en particulier l'un quelconque des procédés 200, 300 ou 400 des FIGURES 2, 3 ou 4.

Le système 700 peut être utilisé pour le suivi d'objets de tout type, et en particulier de personnes, à partir d'images, et en particulier de flux vidéo, provenant de K caméras 702₁-702_{K} dudit système, distribuées dans l'espace et formant un réseau 704 de caméras, avec K≥1. Dans l'exemple représenté, et de manière nullement limitative, K=3.

Le système 700 comprend en outre une unité de calcul 706 configuré pour réaliser un suivi d'objets. L'unité de calcul 706 peut être ou peut comprendre le dispositif 600 de suivi d'objets de la FIGURE 6.

L'unité de calcul 706 peut être locale aux caméras 702₁-702₃ ou distante des caméras 702₁-702₃.

L'unité de calcul 706 peut être reliée à chacune des caméras 502₁-502₃ par une connexion filaire ou sans fil.

Bien entendu l'invention n'est pas limitée aux exemples qui viennent d'être décrits.

## Revendications

1. Procédé (100) de correction de suivi d'objet(s) (200;300;400) dans des images captées par une ou plusieurs caméras (702₁-702₃), ledit suivi d'objets (200;300;400) comprenant une attribution (206) d'un nouvel identifiant à chaque nouvel objet détecté sur lesdites images ;
l'identifiant de chaque objet étant utilisé pour constituer une tracklet associée audit objet et conservé tant que ledit objet n'a pas été perdu lors dudit suivi ; ledit procédé (100) de correction comprenant, pour au moins un nouvel objet détecté sur une image, dite image courante, une étape (104) de comparaison dudit nouvel objet à au moins un objet, dit objet récemment perdu :
- qui a fait l'objet d'un suivi avant la captation de l'image courante, et
- dont le suivi a été perdu depuis une durée inférieure à une durée seuil prédéterminée avant la captation de ladite image courante ;
pour confirmer ou non qu'il s'agit d'un nouvel objet.

2. Procédé (100) selon la revendication précédente, **caractérisé en ce qu'**il comprend, pour au moins un nouvel objet, une étape (110) de confirmation lors de laquelle le résultat de l'étape de comparaison (110) est soumis à un opérateur pour validation ou non.

3. Procédé (100) selon l'une quelconque des revendications précédentes, **caractérisé en ce que**, si le nouvel objet ne correspond à aucun objet récemment perdu, ledit procédé (100) comprend une validation du nouvel identifiant attribué au nouvel objet.

4. Procédé (100) selon l'une quelconque des revendications précédentes, **caractérisé en ce que**, si le nouvel objet correspond à un objet récemment perdu, ledit procédé (100) comprend une étape (114) de fusion de la tracklet du nouvel objet avec la tracklet dudit objet récemment perdu.

5. Procédé (100) selon l'une quelconque des revendications précédentes, **caractérisé en ce que** l'étape de comparaison (104) comprend une comparaison (108) de l'apparence du nouvel objet à celle d'au moins un objet récemment perdu.

6. Procédé (100) selon l'une quelconque des revendications précédentes, **caractérisé en ce que** l'étape de comparaison (104) comprend une comparaison (106) de la position du nouvel objet à celle d'au moins un objet récemment perdu.

7. Procédé (100) selon revendication précédente, **caractérisé en ce que**, pour au moins un objet récemment perdu, la position utilisée pour la comparaison est :
- la dernière position connue dudit objet récemment perdu, et en particulier la position dudit objet récemment perdu sur la dernière image sur laquelle il apparait ; ou
- une position, dite position projetée, dudit objet récemment perdu à l'instant de captation de l'image courante.

8. Procédé (100) selon l'une quelconque des revendications précédentes, **caractérisé en ce que**, pour au moins un nouvel objet détecté, l'étape de comparaison (104) est réalisée après attribution d'un nouvel identifiant audit objet.

9. Procédé selon l'une quelconque des revendications 1 à 7, **caractérisé en ce que**, pour au moins un nouvel objet détecté, l'étape de comparaison est réalisée avant attribution d'un nouvel identifiant audit objet, le nouvel identifiant étant attribué en cas de confirmation qu'il s'agit bien d'un nouvel objet.

10. Procédé (100) selon l'une quelconque des revendications précédentes, **caractérisé en ce que** les images sont captées par une même caméra, ou par plusieurs caméras.

11. Programme d'ordinateur comprenant des instructions exécutables qui, lorsqu'elles sont exécutées par un appareil informatique, mettent en en oeuvre toutes les étapes du procédé (100) selon l'une quelconque des revendications précédentes.

12. Dispositif (500) de correction de suivi d'objet(s) comprenant des moyens configurés pour mettre en oeuvre toutes les étapes du procédé (100) selon l'une quelconque des revendications 1 à 10.

13. Procédé (200;300;400) de suivi d'objet(s) dans des images captées par une ou plusieurs caméras (502₁-502₃), ledit procédé (200;300;400) comprenant :
- un suivi (202-206) d'au moins un objet sur lesdites images, et
- une correction dudit suivi d'objets par le procédé (100) selon l'une quelconque des revendications 1 à 10.

14. Procédé (200;300;400) selon la revendication précédente, **caractérisé en ce que** la correction peut être mise en oeuvre :
- lors du suivi d'objets, en particulier en temps réel :
- après le suivi d'objets, en particulier après la fin dudit suivi d'objets.

15. Système (700) de suivi d'objet(s) comprenant :
- au moins une caméra (702₁-702₃), et
- au moins une unité de calcul (706) ;
configurées pour mettre en oeuvre toutes les étapes du procédé (200;300;400) selon l'une quelconque des revendications 13 ou 14.
